# EUROPEAN PATENT SPECIFICATION

(11) **EP 1 951 560 B1**
(45) Date of publication and mention of the grant of the patent: **22.07.2009**
(21) Application number: 06820923.8
(22) Date of filing: 20.11.2006
(51) Int. Cl.: B60R 21/233, B60R 21/205

(54) **AIRBAG APPARATUS**
AIRBAGVORRICHTUNG
APPAREIL DE COUSSIN DE SÉCURITÉ

(30) Priority: 24.11.2005 JP 2005339396
(43) Date of publication of application: 06.08.2008
(73) Proprietor: TOYOTA JIDOSHA KABUSHIKI KAISHA, Toyota-shi, Aichi-ken, 471-8571 (JP)
(72) Inventor: FUKAWATASE, Osamu, Toyota-shi, Aichi-ken, 471-8571 (JP); SEKIZUKA, Makoto, Toyota-shi, Aichi-ken, 471-8571 (JP); SANADA, Akiyoshi, Toyota-shi, Aichi-ken, 471-8571 (JP); NEZAKI, Takuya, Toyota-shi, Aichi-ken, 471-8571 (JP)
(74) Representative: Winter, Brandl, Fürniss, Hübner Röss, Kaiser, Polte Partnerschaft Patent- und Rechtsanwaltskanzlei
(86) International application number: PCT/IB2006/003271
(87) International publication number: WO 2007/060515

(56) References cited:
- WO-A-00/15472
- DE-A1- 4 334 606
- DE-A1- 19 826 734
- JP-A- 2001 233 157
- US-A1- 2002 175 511
- US-A1- 2005 161 918

## Description

### BACKGROUND OF THE INVENTION

### 1. Field of the Invention

The invention relates to an airbag apparatus that deploys an airbag to the side of an occupant at the time of a collision.

### 2. Description of Related Art

Japanese Patent Application Publication No. JP-A-2001-233157 discloses a passenger-seat side airbag apparatus according to the preamble of claim 1 in which a recess portion is formed in an intermediate portion of the airbag between an upper portion and a lower portion thereof in a view of the airbag from a front side (an occupant side). According to this technology, the lower portion of the airbag restrains an occupant's stomach and chest, and subsequently the upper portion of the airbag restrains the occupant's head. The recess portion formed in the intermediate portion of the airbag is designed to retain its shape during the time of restraint: Therefore, when the lower portion of the airbag first contacts the occupant's stomach and chest, the internal pressure of the lower portion of the bag effectively increases, thus increasing the initial restraint capability for the occupant's stomach and chest. Subsequently, the internal pressure of the lower portion of the airbag is supplied (shifted) toward the upper portion of the bag to increase the restraint capability for the occupant's head. Hence, the output of the inflator can be reduced, so that the capacity of the airbag can be reduced.

### SUMMARY OF THE INVENTION

However, in the aforementioned related technology, the capacity reduction of the airbag is limited due to the construction of restraining the stomach and the chest of an occupant by the airbag itself. Therefore, in this respect, there is room for improvement in the related technology.

In view of the aforementioned fact, it is an object of the invention to provide an airbag apparatus that allows further capacity reduction of the airbag.

An airbag apparatus in accordance with a first aspect of the invention comprises: gas generation means that activates to jet a gas at a time of a vehicle collision; and an airbag that includes a thin type first airbag that is deployed along an inside surface of a windshield by receiving a supply of the gas generated by the gas generation means, and a thin type second airbag that is deployed along an upper surface of an instrument panel by receiving a supply of the gas generated by the gas generation means, the first airbag and the second airbag being housed in a folded state in the instrument panel.

According to the first aspect of the invention, when the vehicle enters a collision, gas is jetted by the gas generation means. This gas is supplied into the airbag that is housed in a folded state in the instrument panel.

In the invention, the airbag includes the first airbag and the second airbag each of which is of a thin type. Upon receiving a supply of the gas, the first airbag is deployed along the inside surface of the windshield, and the second airbag is deployed along the upper surface of the instrument panel. Therefore, the first airbag prevents the head of an occupant from contacting the windshield, and the second airbag prevents the head of the occupant from contacting the instrument panel.

Specifically, the occupant is normally in a webbing fastened state of a seat belt apparatus, the stomach (including the hip) and the chest of the occupant are restrained to a vehicular seat by the webbing. Therefore, it is the head of the occupant that has a large possibility of considerably moving to the front side of the vehicle as an inertia movement at the time of a collision of the vehicle. The invention is intended to restrain the head of the occupant by receiving the head between the first airbag and the second airbag. In this manner, collision energy at the time of collision of the vehicle is absorbed.

In other words, the stomach and the chest of the occupant are restrained by the seat belt apparatus, and the head of the occupant is restrained by the airbag. Thus, the functions of restraining the occupant are divided between the seat belt apparatus and the airbag apparatus. Therefore, since the airbag needs merely to inflate in such a range as to restrain the head of the occupant, the capacity of the airbag can be considerably reduced.

As described above, in the airbag apparatus in accordance with the first aspect of the invention, the air bag includes the first airbag that is deployed along the inside surface of the windshield, and the second airbag that is deployed along the upper surface of the instrument panel, and the airbag is designed so as to specifically restrain an occupant's head by the first and second airbags. Therefore, this airbag apparatus has an excellent effect of allowing further capacity reduction of the airbag.

A second aspect of the invention, based on the airbag apparatus according to the first aspect, is **characterized in that** the first airbag is deployed to a side of the windshield and the second airbag is deployed to a side of the upper surface of the instrument panel as a near-root portion of the first airbag and a near-root portion of the second airbag take reaction forces from each other.

According to the second aspect of the invention, at the time of deployment of the airbag, the first airbag is deployed to the side of the windshield and the second airbag is deployed to the side of the upper surface of the instrument panel as the near-root portion of the first airbag and the near-root portion of the second airbag take reaction forces from each other. These reaction forces, during the deployment of the airbag, have effects of increasing the deploying speeds of the first airbag and the second airbag, and of causing the first airbag to deploy along the inside surface of the windshield and causing the second airbag to deploy along the upper surface of the instrument panel. Furthermore, after the airbag is deployed, the reaction forces have an effect of preventing or curbing sag of the first airbag to the side of the second airbag.

In the airbag apparatus in accordance with the second aspect of the invention, the first airbag is deployed to the side of the windshield and the second airbag is deployed to the side of the upper surface of the instrument panel as the near-root portion of the first airbag and the near-root portion of the second airbag take reaction forces from each other. Therefore, this airbag apparatus has an excellent effect of being capable of quickly deploying the first airbag and the second airbag respectively in desired directions and to desired positions.

A third aspect of the invention, based on the airbag apparatus according to the first or second aspect, is **characterized in that** a distal end portion of the first airbag and a distal end portion of the second airbag are interconnected substantially in an up-down direction of the vehicle by a soft non-expansible material.

According to the third aspect of the invention, since the distal end portion of the first airbag and the distal end portion of the second airbag are interconnected substantially in a vehicular up-down direction by a soft non-expansible material, the head of an occupant first contacts the non-expansible material at the time of a frontal collision. Therefore, the initial restraint capability for the occupant's head improves. In addition, after the initial restraint of the occupant's head, the first airbag and the second airbag are drawn toward each other due to the non-expansible material, so that the occupant's head is tucked between the two airbags. Therefore, the occupant's head can be softly restrained.

In the airbag apparatus in accordance with the third aspect of the invention, the distal end portion of the first airbag and the distal end portion of the second airbag are interconnected substantially in the up-down direction of the vehicle by the soft non-expansible material, it is possible to achieve both further reduced capacity of the airbag and improved initial restraint capability for an occupant's head. This airbag apparatus has another excellent effect as follows. After the initial restraint of the occupant's head, the entire airbag restrains the occupant's head so that the head is tucked between the first airbag and the second airbag. Thus, the input of load to the occupant's head can be reduced.

A fourth aspect of the invention, based on the airbag apparatus according to the third aspect, is **characterized in that** the non-expansible material is formed by a cloth material.

According to the fourth aspect of the invention, since the non-expansible material is formed by a cloth, the non-expansible material is not bulky at the time of housing the airbag, and is light in weight, and can be provided at only a slight increase in cost.

In the airbag apparatus in accordance with the fourth aspect of the invention, the non-expansible material is a cloth material. Therefore, this airbag apparatus has excellent effects of allowing the increase in the installation space for housing the airbag to be made zero or minimum, and of realizing improved initial restraint capability for an occupant's head at low cost.

A fifth aspect of the invention, based on the airbag apparatus according to the first or second aspect, is **characterized in that** shape retention means for retaining a shape of the first airbag and a shape of the second airbag is provided between the first airbag and the second airbag.

According to the fifth aspect of the invention, since the shape retention means for retaining the shapes of the first airbag and the second airbag is provided between the two airbags, the post-deployment shapes of the first airbag and the second airbag become stable.

In the airbag apparatus in accordance with the fifth aspect of the invention, the shape retention means for retaining the shapes of the first airbag and the second airbag is provided between the two airbags. Therefore, this airbag apparatus has an excellent effect of improving the restraint capability for an occupant's head due to the shape retaining effect.

The term "shape retention means" is to be understood as every means able to retain the shapes of the first airbag and the second airbag. A few possible embodiments of the "shape retention means" are described in a later section.

A sixth aspect of the invention, based on the airbag apparatus according to the first or second aspect, is **characterized in that** the airbag has been sewed so that an angle formed by the first airbag and the second airbag is larger than an angle formed by the inside surface of the windshield and the upper surface of the instrument panel.

According to the sixth aspect of the invention, since the airbag has been sewed so that the angle formed by the first airbag and the second airbag is larger than the angle formed by the inside surface of the windshield and the upper surface of the instrument panel, the first airbag and the second airbag, after being deployed, have elastic restoration forces that urge the airbags to return to their shapes assumed in the natural state. Therefore, from an initial stage of the deployment, the first airbag is deployed along the inside surface of the windshield, and the second airbag is deployed along the upper surface of the instrument panel.

Furthermore, according to this construction, the number of component parts does not increase at all.

In the airbag apparatus in accordance with the sixth aspect of the invention, the airbag has been sewed so that the angle formed by the first airbag and the second airbag is larger than the angle formed by the inside surface of the windshield and the upper surface of the instrument panel. Therefore, this airbag apparatus has an excellent effect of being capable of deploying the first airbag to the side of the windshield and deploying the second airbag to the side of the upper surface of the instrument panel without increasing the number of component parts.

A seventh aspect of the invention, based on the airbag apparatus according to any one of the first to sixth aspects, is **characterized in that** the first airbag and the second airbag are separately and independently folded both in a roll folding, or both in an accordion folding, or one in the roll folding and the other in the accordion folding, or at least one in a combination of the roll folding and the accordion folding, and that the first airbag and the second airbag are folded so as to unfold in directions away from each other.

According to the seventh aspect of the invention, since the first airbag and the second airbag are separately and independently folded both in the roll folding, or both in the accordion folding, or one in the roll folding and the other in the accordion folding, or at least one in a combination of the roll folding and the accordion folding, the first airbag and the second airbag are free from the influences of each other's deploying actions.

Furthermore, since the first airbag and the second airbag are folded so as to unfold in directions away from each other, the first airbag will deploy more accurately along the windshield, and the second airbag will deploy more accurately along the upper surface of the instrument panel.

Still further, according to this construction, the number of component parts does not increase at all.

In the airbag apparatus in accordance with the seventh aspect of the invention, the first airbag and the second airbag are separately and independently folded both in the roll folding, or both in the accordion folding, or one in the roll folding and the other in the accordion folding, or at least one in a combination of the roll folding and the accordion folding. Therefore, this airbag apparatus has an excellent effect of being capable of deploying the first airbag to the side of the windshield and deploying the second airbag to the side of the upper surface of the instrument panel without increasing the number of component parts.

### BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:
FIG. 1 is a longitudinal sectional view showing an activated state of a passenger-seat side airbag apparatus in accordance with a first embodiment;
FIG. 2 is a perspective view showing a deployed state the passenger-seat side airbag shown in FIG. 1;
FIGS. 3A to 3D are serial diagrams showing a deploying process of the passenger-seat side airbag shown in FIG. 1, and FIG. 3A is a schematic sectional view showing a housed state, and FIGS. 3B, 3B and 3D are schematic sectional views showing serial states of deployment:
FIG. 4 is a longitudinal sectional view showing an activated state of a passenger-seat side airbag apparatus in accordance with a second embodiment;
FIG. 5 is a perspective view showing a deployed state of the passenger-seat side airbag shown in FIG. 4;
FIG. 6 is a longitudinal sectional view showing an activated state of a passenger-seat side airbag apparatus in accordance with a third embodiment;
FIG 7 is perspective view showing a deployed state of the passenger-seat side airbag shown in FIG 6;
FIG. 8 is a longitudinal sectional view showing an activated state of a passenger-seat side airbag apparatus in accordance with a fourth embodiment;
FIG. 9 is perspective view showing a deployed state of the passenger-seat side airbag shown in FIG. 8;
FIG. 10 is a longitudinal sectional view showing an activated state of a passenger-seat side airbag apparatus in accordance with a fifth embodiment;
FIG. 11 is perspective view showing a deployed state of the passenger-seat side airbag shown in FIG. 9;
FIG. 12 is a longitudinal sectional view showing an activated state of a passenger-seat side airbag apparatus in accordance with a sixth embodiment;
FIG. 13 is perspective view showing a deployed state of the passenger-seat side airbag shown in FIG. 12;
FIG. 14 is a longitudinal sectional view showing an activated state of a passenger-seat side airbag apparatus in accordance with a seventh embodiment;
FIG. 15 is perspective view showing a deployed state of the passenger-seat side airbag shown in FIG. 14;
FIG. 16 is a longitudinal sectional view showing an activated state of a passenger-seat side airbag apparatus in accordance with an eighth embodiment; and
FIG. 17 is perspective view showing a deployed state of the passenger-seat side airbag shown in FIG. 16.

### DETAILED DESCRIPTION OF THE PREFERRED EMBODIMENTS

### First Embodiment

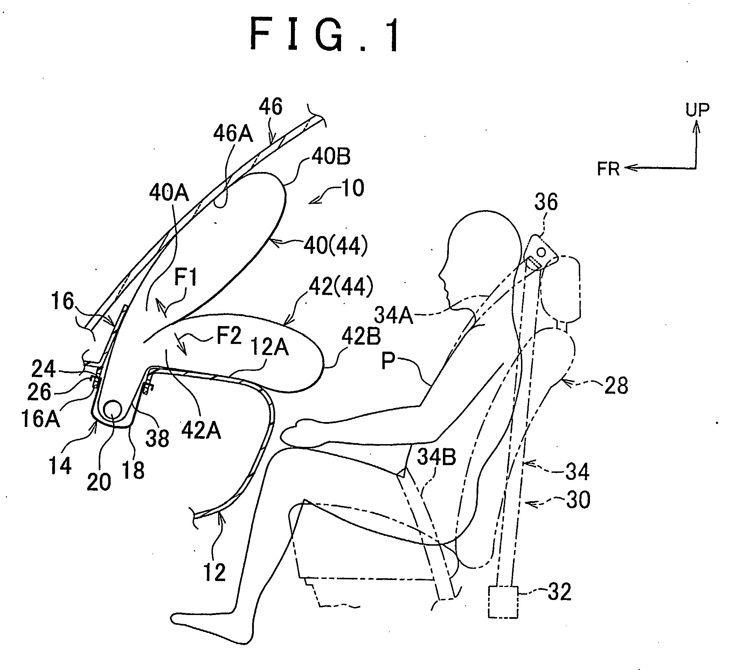

A first embodiment of the passenger-seat side airbag apparatus in accordance with the invention will be described hereinafter with reference to FIGS. 1 to 3. In these drawings, an arrow FR indicates a forward side of a vehicle, and an arrow UP indicates an upper side of the vehicle, and an arrow IN indicates an inner side in the vehicle width direction.

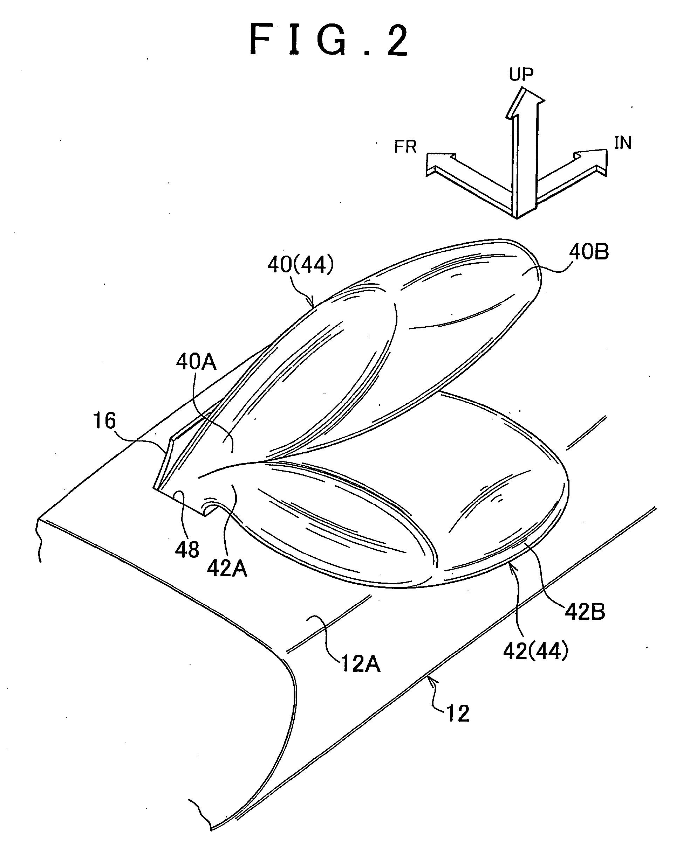

FIG. 1 shows a longitudinal sectional view of a passenger-seat side airbag apparatus 10 in accordance with this embodiment which is mounted in the vehicle. FIG. 2 shows a perspective view of the passenger-seat side airbag apparatus 10. Both figures show the passenger-seat side airbag apparatus 10 in an activated state and an deployed state, respectively.

As shown in these drawings, the passenger-seat side airbag apparatus 10 is disposed in a passenger-seat side of an upper surface 12A of an instrument panel 12. The passenger-seat side airbag apparatus 10 is constructed of, as main parts, an airbag module 14 in which functional component parts are contained, and an airbag door 16 that closes an upper-end opening portion of the airbag module 14. The airbag module 14 includes a module case 18 that is open at an upper surface side thereof and contains functional component parts, a generally cylindrical-shape inflator 20 as a gas generation means that is contained in the module case 18, and a passenger-seat side airbag 44 housed in a folded state around the inflator 20. In addition, in some apparatuses, a diffuser (rectification means) for rectifying the flow of gas is disposed between the inflator 20 and the passenger-seat side airbag 44.

Supplemental descriptions of the aforementioned functional component parts will be given. As for the inflator 20, there are two types: a gas generator agent sealed-in type, and a high-pressure gas sealed-in type, and either type may be used in this embodiment. Furthermore, as for the ignition of the inflator 20, there are an electrical ignition type and a mechanical ignition type, and either type may be used. This embodiment employs an electrical ignition type inflator. The inflator 20 of the electrical ignition type is equipped with an igniting device (not shown). The activation of the igniting device is controlled by an airbag ECU (not shown) that is disposed, for example, at or near a site below the console box. Specifically, if a frontal collision is detected by a front airbag sensor, a center airbag sensor, etc. (or if a frontal collision is predicted by a pre-crash sensor, such as a millimeter-wave radar or the like, that is disposed at or near the center of the front bumper), the airbag ECU determines that the airbag is to be activated, so that a predetermined electric current is supplied to the igniting device.

Furthermore, gas jetting holes for jetting out gas are formed at predetermined positions in a peripheral wall of the inflator 20. The gas jetted out of the gas jetting holes is rectified by the diffuser before flowing into the passenger-seat side airbag 44. Although in this embodiment, the inflator 20 is disposed in an inserted state in the passenger-seat side airbag 44, this is not restrictive. For example, the passenger-seat side airbag apparatus 10 may be designed so that a diffuser is disposed inside the peripheral edge of a gas inflow opening portion formed in the passenger-seat side airbag 44, and the diffuser covers an upper half portion of the inflator 20 that is fixed to a bottom portion of the module case 18. Any construction is applicable as long as the gas jetted out of the inflator 20 is caused to flow into the passenger-seat side airbag 44.

The aforementioned module case 18 is supported via a bracket (not shown) on an instrument panel reinforcement that is a high-strength and high-rigidity member disposed in the vehicle width direction in the instrument panel 12.

As for the airbag door 16, there are an integrated type door that is integrated with the instrument panel 12, and a fitted-in type door in which a separate door is fitted into an opening portion that is formed in the instrument panel 12. Either type may be applied. A tear line that functions as a rupture portion for deploying the airbag door 16 is formed in the obverse or reverse side of the instrument panel 12. When the bag inflating pressure that acts on the airbag door 16 becomes equal to or greater than a predetermined value, the instrument panel 12 ruptures along the tear line, so that the airbag door 16 opens in a single-hinged manner or a double-hinged manner. In addition, a leg portion 16A is formed integrally extending from the reverse side of the airbag door 16, and a latch hole 24 is formed in the leg portion 16A. Corresponding to this, a hook 26 is attached to an upper end side of the module case 18. By inserting the hook 26 of the module case 18 into the latch hole 24 of the leg portion 16A of the airbag door 16, the upper surface side of the module case 18 is closed by the airbag door 16.

Next, a seat belt apparatus 30 that restrains an occupant P sitting in a passenger seat 28 to the passenger seat 28 will be briefly described. The seat belt apparatus 30 is equipped with a webbing winding device 32 that is disposed in or near a lower portion of the center pillar. An end portion of an occupant-restraining webbing 34 is latched to a winding shaft of the webbing winding device 32. An intermediate portion of the webbing 34 is inserted in a shoulder anchor 36 that is provided on an upper portion side of the center pillar, and is bent back. The other end portion of the webbing 34 is latched to an anchor plate that is fixed to the vehicle body, for example, a vehicle body floor or the like. Furthermore, a tongue plate (not shown) is inserted over an intermediate portion of the webbing 34 (a portion extending from the shoulder anchor 36 to the anchor plate). By engaging the tongue plate with a buckle device that is attached to a seat cushion frame of the passenger seat 28, the occupant P obtains a webbing fastened state of the three-point seat belt apparatus 30 which is achieved by a shoulder-side webbing 34A and a lap-side webbing 34B.

Now, a structure of the passenger-seat side airbag 44, which is a significant portion of the passenger-seat side airbag apparatus 10 in accordance with this embodiment, will be described.

The passenger-seat side airbag 44 is constructed of a first airbag 40 and a second airbag 42 that share a base end portion 38. The first airbag 40 is formed in a thin shape, and is designed to deploy along an inside surface 46A of a windshield 46. The second airbag 42 is also formed in a thin shape, but is designed to deploy along the upper surface 12A of the instrument panel 12. Therefore, in a side view of the deployed passenger-seat side airbag 44, the airbag 44 has a shape like the angle symbol (∠) (a generally L-shape).

Furthermore, as shown in FIG. 2, in the deployed state of the passenger-seat side airbag 44, a near-root portion 40A of the first airbag 40 and a near-root portion 42A of the second airbag 42 press each other. That is, the near-root portion 40A of the first airbag 40 assumes a deployed state by taking the reaction force F1 (see FIG. 1) from the near-root portion 42A of the second airbag 42, and the near-root portion 42A of the second airbag 42 assumes a deployed state by taking the reaction force F2 (see FIG 1) from the near-root portion 40A of the first airbag 40.

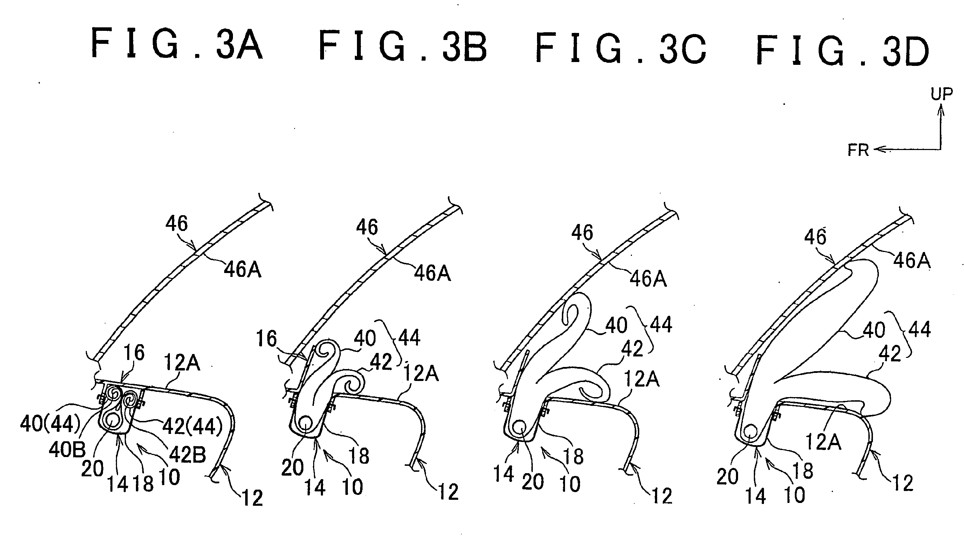

Furthermore, as shown in FIG. 3A, the first airbag 40 and the second airbag 42 are separately and independently folded in the roll folding so that the first airbag 40 and the second airbag 42 will unfold in directions away from each other. Concretely, the first airbag 40 is rolled in the following manner. That is, with its distal end portion 40B initially rolled in, the first air bag 40 is rolled counterclockwise so that the rolled portion slides down along the inside surface 46A of the windshield 46 as the rolling progresses. On the other hand, with its distal end portion 42B initially rolled in, the second airbag 42 is rolled clockwise so that the rolled portion traces the upper surface 12A of the instrument panel 12 from rear to front. Instead of the roll folding, the accordion folding may be adopted. Furthermore, one of the first airbag 40 and the second airbag 42 may be folded in the roll folding, with the other folded in the accordion folding. Still further, each of the first airbag 40 and the second airbag 42 may be folded in a combination of the roll folding and the accordion folding.

Next, operation and effects of the embodiment will be described.

Firstly, the overall action of the passenger-seat side airbag apparatus 10 in accordance with the embodiment will be briefly described. If a frontal collision state is detected by a front airbag sensor and a center airbag sensor (which are not shown), or if the entry into a frontal collision is predicted by a pre-crash sensor (not shown), the inflator 20 is activated by the airbag ECU. As the inflator 20 activates, the gas is jetted out of a plurality of gas jetting holes formed in the peripheral wall portion of the inflator 20. The jetted gas, after being rectified by the diffuser, flows into the passenger-seat side airbag 44. As a result, the passenger-seat side airbag 44 inflates. When the bag internal pressure reaches or exceeds a predetermined value, the airbag door 16 breaks along the tear line, and is deployed in a single-hinged manner to the side of the windshield 46. As the airbag door 16 is deployed, an opening portion 48 for the bag inflation is formed in the upper surface 12A of the instrument panel 12, so that the passenger-seat side airbag 44 inflates out to the side of the passenger seat 28.

It is to be noted herein that in the embodiment, the passenger-seat side airbag 44 includes the first airbag 40 and the second airbag 42 that each have a thin shape. When supplied with gas from the inflator 20, the first airbag 40 deploys along the inside surface 46A of the windshield 46, and the second airbag 42 deploys along the upper surface 12A of the instrument panel 12. Therefore, the first airbag 40 prevents the occupant P from contacting the windshield 46, and the second airbag 42 prevents the occupant P from contacting the instrument panel 12.

FIGS. 3A to 3D show a process of deployment of the passenger-seat side airbag 44. The state shown in FIG. 3A is a state where the passenger-seat side airbag 44 is housed. When, from this state, the inflator 20 is activated to start supplying gas, the first airbag 40 and the second airbag 42 simultaneously begin to unfold as the airbag door 16 is deployed to the windshield 46 side, as shown in FIG. 3B. Then, as the deployment further progresses as shown in FIG. 3C, the first airbag 40 deploys along the inside surface 46A of the windshield 46 because of the direction of the roll folding thereof, and the second airbag 42 deploys along the upper surface 12A of the instrument panel 12 because of the direction of the roll folding thereof. FIG. 3D shows a situation where the first airbag 40 and the second airbag 42 are further deployed. Then, the first airbag 40 and the second airbag 42 reaches a final deployed state as shown in FIGS. 1 and 2.

Specifically, the occupant P is normally in the webbing fastened state of the seat belt apparatus 30, the stomach (including the hip) and the chest of the occupant P are restrained to the passenger seat 28 by the webbing 34. Therefore, it is the head of the occupant P that has a large possibility of considerably moving to the front side of the vehicle as an inertia movement at the time of a collision of the vehicle. This embodiment is intended to restrain the head of the occupant P by receiving the head between the first airbag 40 and the second airbag 42. In this manner, collision energy at the time of collision of the vehicle is absorbed.

In other words, the stomach and the chest of the occupant P are restrained by the seat belt apparatus 30, and the head of the occupant P is restrained by the passenger-seat side airbag 44. Thus, the functions of restraining the occupant P are divided between the seat belt apparatus and the airbag apparatus. Therefore, since the passenger-seat side airbag 44 needs merely to inflate so as to (in such a range as to) restrain the head of the occupant P, the portion between the first airbag 40 and the second airbag 42 can be eliminated. Hence, the embodiment is able to further reduce the capacity of the passenger-seat side airbag 44.

Furthermore, in the passenger-seat side airbag apparatus 10 in accordance with the embodiment, when the passenger-seat side airbag 44 is deployed, the near-root portion 40A of the first airbag 40 deploys and maintains the deployed state by taking the reaction force F1 from the second airbag 42, and the near-root portion 42A of the second airbag 42 deploys and maintains the deployed state by taking the reaction force F2 from the first airbag 40; in other words, the two airbags deploy and maintain the deployed state by taking the reactions from each other's near-root portions 40A, 42A. Therefore, the first airbag 40 and the second airbag 42 can be quickly deployed in the directions and to the desired positions. That is, if, for example, the near-root portion 40A of the first airbag 40 should fail to take the reaction force F1 from the second airbag 42 or should receive only insufficient reaction force therefrom, the deploying speed of the first airbag 40 will correspondingly decrease. Furthermore, the near-root portion 40A will become unstable, resulting in variability in the direction and position of deployment. Substantially the same things can be said with regard to the second airbag 42. Therefore, by taking the reaction forces from each other, the first airbag 40 and the second airbag 42 can quickly deploy in the desired directions and to the desired positions.

Supplemental description will be given regarding the aforementioned "reaction forces". The "reaction forces", during the deployment of the airbag 44, have effects of increasing the deploying speed of the first airbag 40 and the second airbag 44, and of causing the first airbag 40 to deploy along the inside surface 46A of the windshield 46 and causing the second airbag 42 to deploy along the upper surface 12A of the instrument panel 12. Furthermore, after the airbag 44 is deployed, the reaction forces have an effect of preventing or curbing sag of the first airbag 40 to the side of the second airbag 24.

Furthermore, in the passenger-seat side airbag apparatus 10 in accordance with the embodiment, the first airbag 40 and the second airbag 42 are separately and independently folded in the roll folding. Therefore, the first airbag 40 and the second airbag 42 are free from the influences of each other's deploying actions. That is, for example, if the first airbag 40 and the second airbag 42 are folded in an overlapped manner, the deploying action of one of the airbags interferes with the deploying action of the other airbag, so that the quick deployment may be impeded. However, according to the embodiment, since the first airbag 40 and the second airbag 42 are separately and independently folded, the mutual interference of the two airbags during deployment can be avoided, so that the first airbag 40 and the second airbag 42 can be quickly deployed.

Still further, since the first airbag 40 and the second airbag 42 are folded in such a manner that they will unfold in directions away from each other, the first airbag 40 will deploy more accurately along the inside surface 46A of the windshield 46, and the second airbag 42 will deploy more accurately along the upper surface 12A of the instrument panel 12.

Therefore, according to the embodiment, since the first airbag 40 and the second airbag 42 can be deployed quickly and accurately, the capability of restraining the head of the occupant P can be made further reliable.

### Second Embodiment

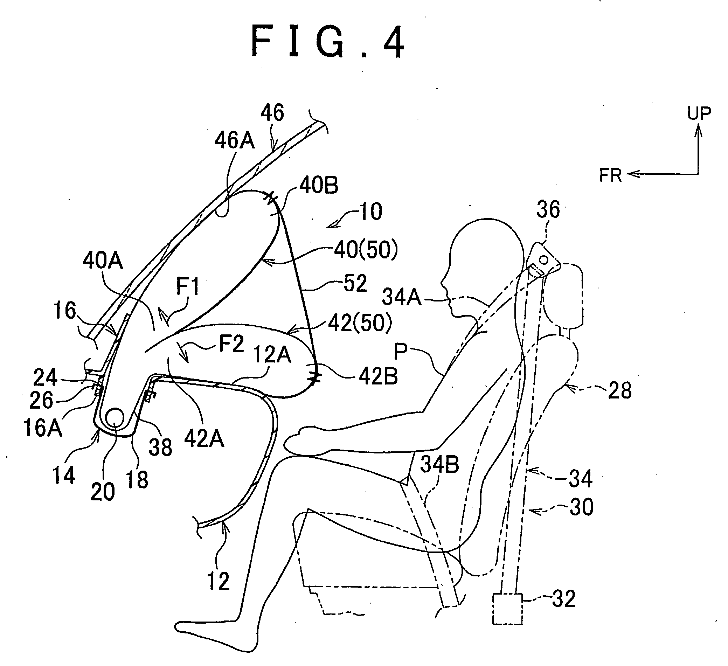

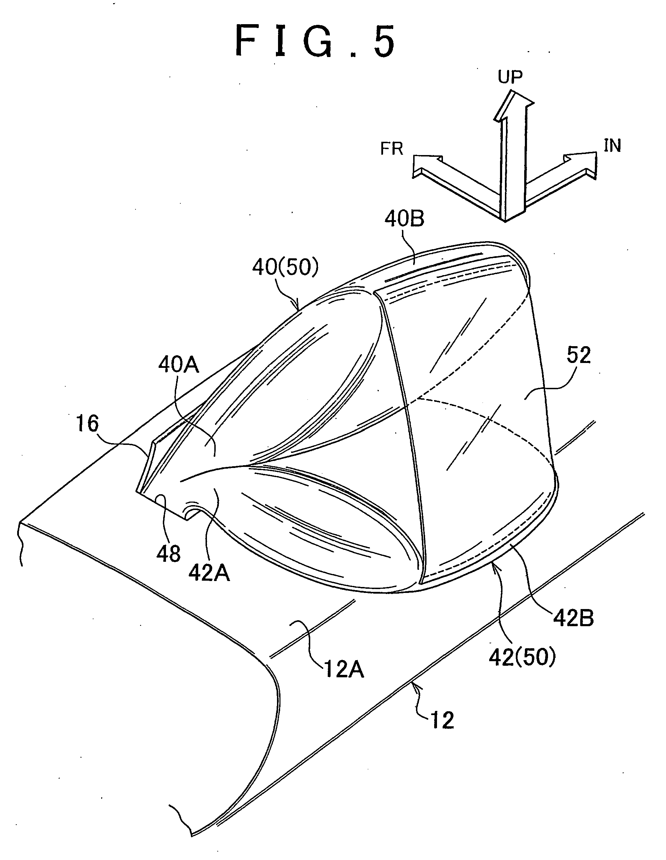

Next, a second embodiment of the airbag apparatus in accordance with the invention will be described with reference to FIGS. 4 and 5. The same portions and the like as in the first embodiment are represented by the same reference signs, and will not be described again (this also applies to the third and other embodiments).

As shown in these drawings, a passenger-seat side airbag apparatus 10 in accordance with the second embodiment has a feature where a first airbag 40 and a second airbag 42 constituting a main body portion of a passenger-seat side airbag 50 are interconnected, at a distal end portion 40B of the first airbag 40 and a distal end portion 42B of the second airbag 42, in a vertical direction relative to the vehicle by a cloth 52 as a non-expandable member that has been cut into a generally rectangular shape in a view from the occupant side.

According to the embodiment constructed as described above, since the cloth 52 is connected between the distal end portion 40B of the first airbag 40 and the distal end portion 42B of the second airbag 42, the head of an occupant P, at the time of a frontal collision, will contact the cloth 52 before contacting the first airbag 40 and the second airbag 42. Therefore, the time before the head of the occupant P contacts the passenger-seat side airbag 50 can be shortened, and the initial occupant restraint capability can be correspondingly improved.

Moreover, after the initial restraint of the head of the occupant P, the first airbag 40 and the second airbag 42 are drawn toward each other due to the cloth 52, so that the head of the occupant P is tucked between the two airbags. Therefore, the head of the occupant P can be softly restrained. As a result, the amount of load input to the head of the occupant P will lessen.

Furthermore, the member employed herein is the cloth 52, which is not bulky at the time of housing the passenger-seat side airbag 50, and is light in weight, and can be provided at only a slight increase in cost. Consequently, according to the embodiment, the increase in the installation space for housing the passenger-seat side airbag 44 can be made zero or minimum, and at the same time, the capability of initial restraint of the head of the occupant P can be improved at very low cost.

### Third Embodiment

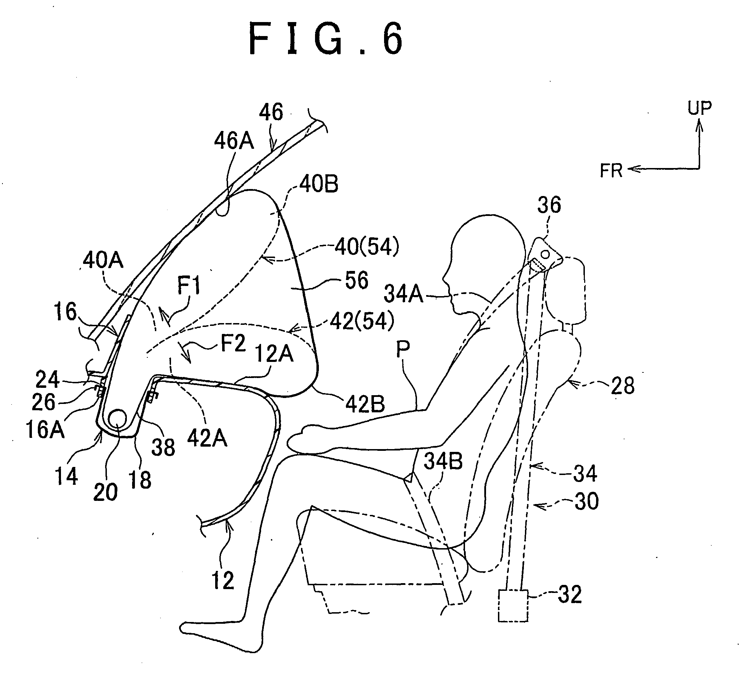

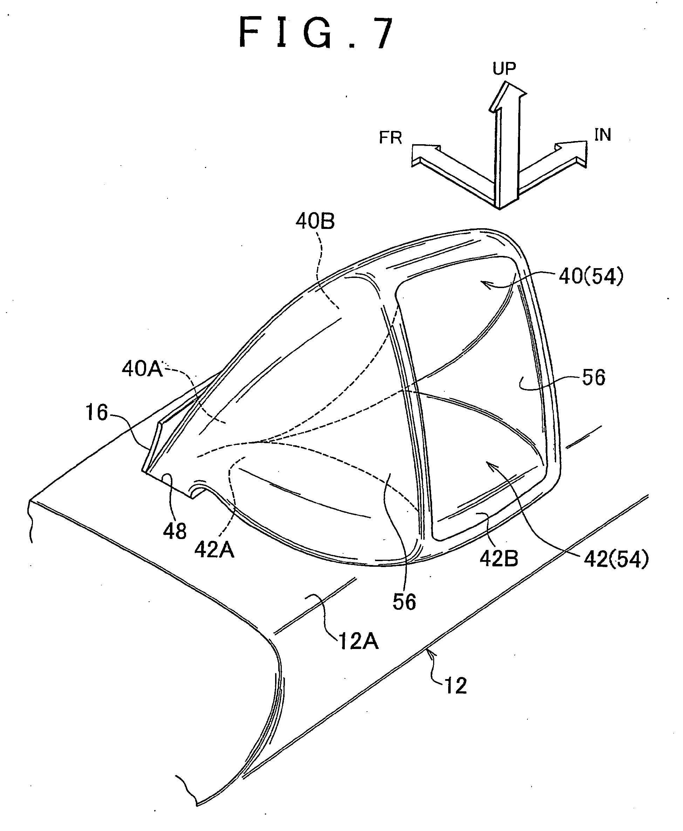

Next, a third embodiment of the airbag apparatus in accordance with the invention will be described with reference to FIGS. 6 and 7.

As shown in these drawings, a passenger-seat side airbag apparatus 10 in accordance with the third embodiment has a feature where opposite side portions of a first airbag 40 and a second airbag 42 that constitute a main body portion of a passenger-seat side airbag 54 are interconnected by a pair of left and right side wall portions 56 provided as shape retention means.

According to the embodiment constructed as described above, since the first airbag 40 and the second airbag 42 are interconnected by the left and right side wall portions 56, the vertical positions of the first airbag 40 and the second airbag 42 become stable. Therefore, the first airbag 40 can be deployed more accurately along the inside surface 46A of the windshield 46, and the second airbag 42 can be deployed more accurately along the upper surface 12A of the instrument panel 12.

### Fourth Embodiment

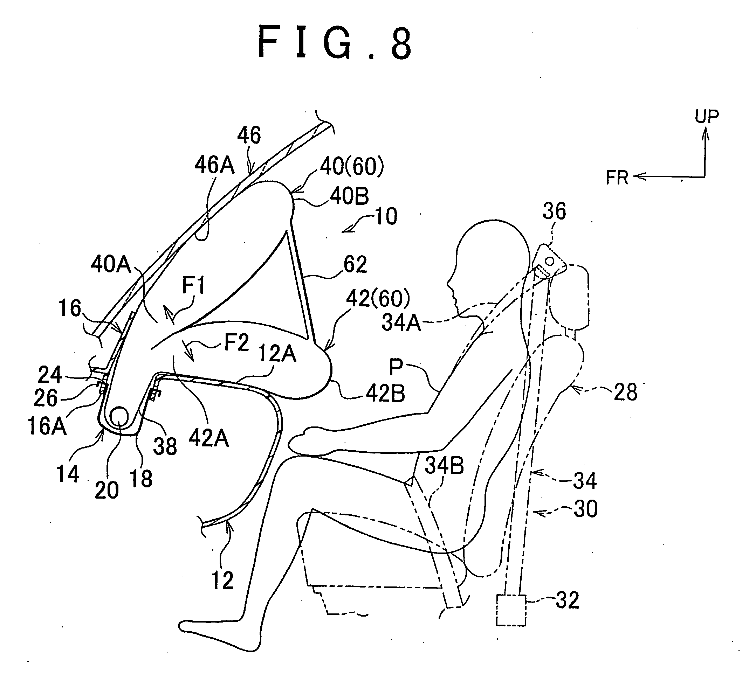

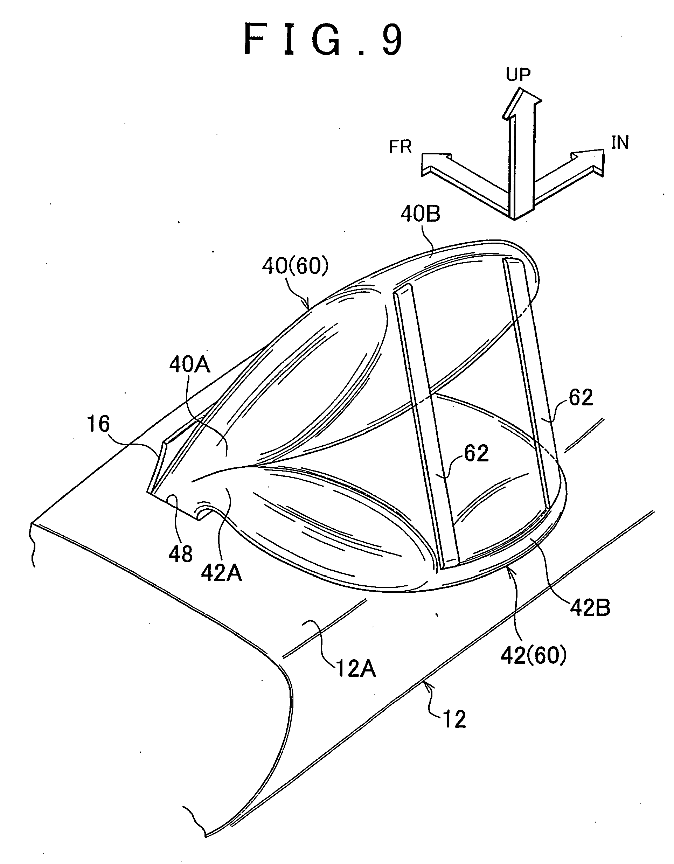

Next, a fourth embodiment of the airbag apparatus in accordance with the invention will be described with reference to FIGS. 8 and 9.

As shown in these drawings, a passenger-seat side airbag apparatus 10 in accordance with the fourth embodiment has a feature where distal end portions 40B, 42B of a first airbag 40 and a second airbag 42 that constitute a main body portion of a passenger-seat side airbag 60 are interconnected in a vertical direction relative to the vehicle by a pair of left and right columns 62 provided as shape retention means. Each of the columns 62 has a hollow interior into which gas will flow from both the first airbag 40 and the second airbag 42.

According to the embodiment constructed as described above, since the distal end portion 40B of the first airbag 40 and the distal end portion 42B of the second airbag 42 are interconnected in the vertical direction by the left and right columns 62, the vertical positions of the first airbag 40 and the second airbag 42 become stable. Therefore, in addition to the aforementioned advantage of the near-root portion 40A of the first airbag 40 and the near-root portion 42A of the second airbag 42 taking reaction forces from each other, the embodiment achieves a retention force of retaining ideal shapes of the first airbag 40 and the second airbag 42 after deployment (which are a deployed shape of the first airbag 40 that extends along the inside surface 46A of the windshield 46, and a deployed shape of the second airbag 42 that extends along the upper surface 12A of the instrument panel 12, respectively). Consequently, the post-deployment shapes of the first airbag 40 and the second airbag 42 will be stable, and the capability of restraining the head of the occupant P can be enhanced.

### Fifth Embodiment

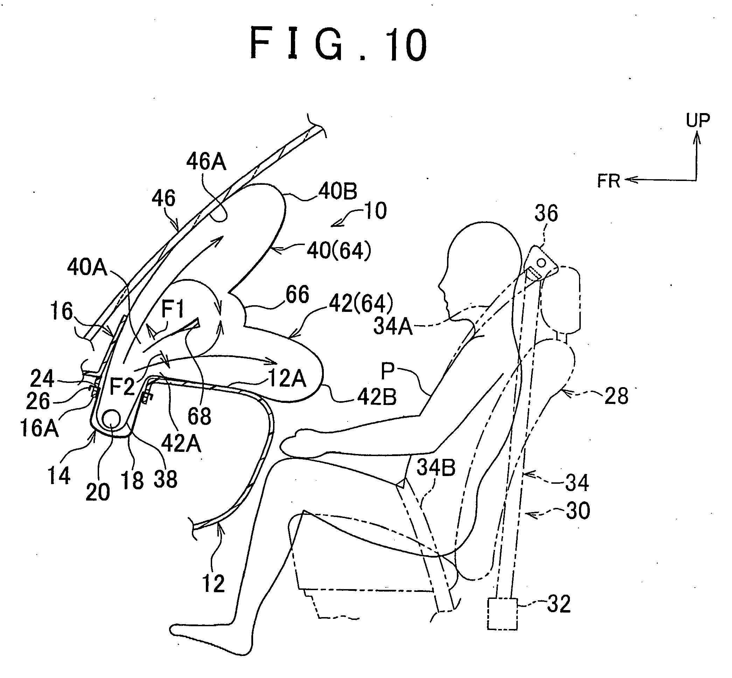

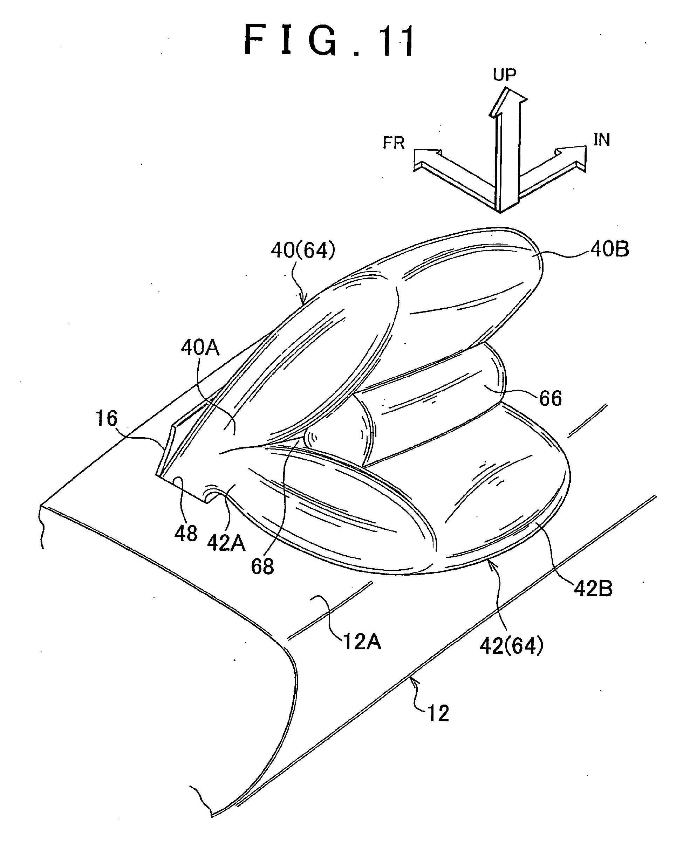

Next, a fifth embodiment of the airbag apparatus in accordance with the invention will be described with reference to FIGS. 10 and 11.

As shown in these drawings, a passenger-seat side airbag apparatus 10 in accordance with the fifth embodiment has a feature where a first airbag 40 and a second airbag 42 constituting a main body portion of a passenger-seat side airbag 64 are interconnected, at a site adjacent to a near-root portion 40A of the first airbag 40 and a site adjacent to a near-root portion 42A of the second airbag 42 in a vertical direction relative to the vehicle, by a support portion 66 provided as a shape retention means which has a transversely extending cylindrical shape. The support portion 66 has a hollow interior, and is connected in communication with both the first airbag 40 and the second airbag 42. In addition, a wedge-shape gap space 68 is formed between the support portion 66 and a site where the first airbag 40 and the second airbag 42 intersect.

According to the embodiment constructed as described above, at the time of inflation of the passenger-seat side airbag 64, the gas jetted out from the inflator 20 flows into the first airbag 40 and the second airbag 42, and then flows into the support portion 66 (flows of the gas are indicated by arrows in FIG. 10). When the support 66 is inflated, the first airbag 40 and the second airbag 42 are pressed in directions away from each other by the support portion 66, so that the vertical positions of the first airbag 40 and the second airbag 42 become stable. Therefore, in addition to the aforementioned advantage of the near-root portion 40A of the first airbag 40 and the near-root portion 42A of the second airbag 42 taking reaction forces F1, F2 from each other, the embodiment achieves a retention force of retaining ideal shapes of the first airbag 40 and the second airbag 42 after deployment. Consequently, the post-deployment shapes of the first airbag 40 and the second airbag 42 will be stable, and the capability of restraining the head of the occupant P can be enhanced.

### Sixth Embodiment

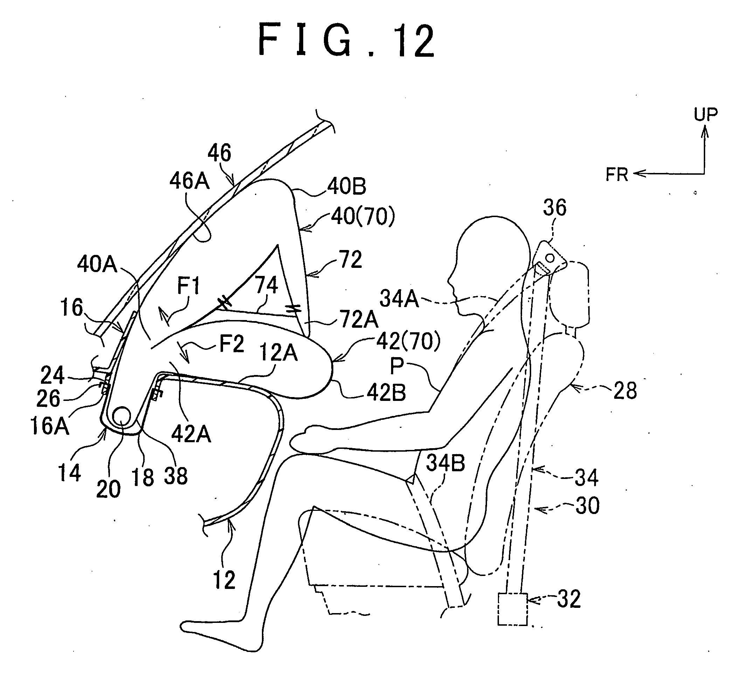

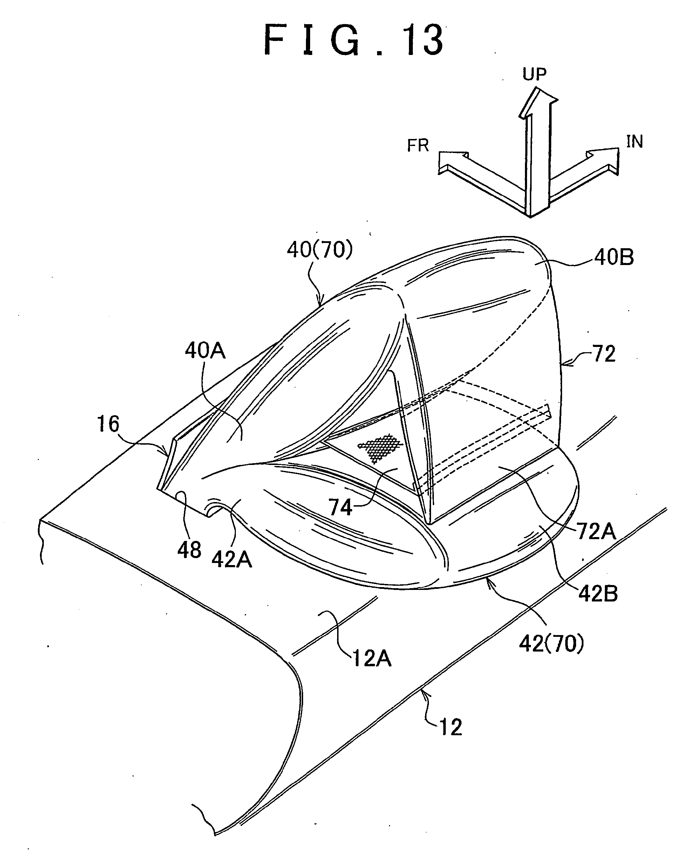

Next, a sixth embodiment of the airbag apparatus in accordance with the invention will be described with reference to FIGS. 12 and 13.

As shown in these drawings, a passenger-seat side airbag apparatus 10 in accordance with the sixth embodiment has a feature where a support portion 72 is formed which is bent and extends downward from a distal end portion 40B of a first airbag 40 that constitutes a main body portion of a passenger-seat side airbag 70. Since the support portion 72 is connected in communication with the first airbag 40, the support portion 72 inflates as it is supplied with gas from the first airbag 40. In addition, the support portion 72 is formed in a triangular shape that tapers downward in a side view. A distal end portion 72A of the support portion 72 contacts a site on a second airbag 42 which is forwardly (forwardly relative to the vehicle) adjacent to a distal end portion 42B of the second airbag 42. Furthermore, a forward surface of a distal end portion 72A of the support portion 72 and a site adjacent to the site where the first airbag 40 and the second airbag 42 intersect are interconnected by an elongated strap 74. Therefore, when the passenger-seat side airbag 70 is deployed, the distal end portion 72A of the support portion 72 does not fall off from the distal end portion 42B of the second airbag 42.

According to the embodiment constructed as described above, at the time of inflation of the passenger-seat side airbag 70, the gas jetted out of the inflator 20 flows into the first airbag 40 and the second airbag 42, inflating the two airbags. At this time, the gas introduced into the first airbag 40 flows into the support portion 72, inflating the support portion 72. Therefore, the first airbag 40 and the support portion 72 inflate into a hook shape, which is maintained by the strap 74.

Since the support portion 72 is present between the distal end portion 40B of the first airbag 40 and the distal end portion 42B of the second airbag 42, as a wall upstanding in a vertical direction relative to the vehicle, the first airbag 40 and the second airbag 42 obtain, at the support portion 72, reaction forces from each other in directions away from each other. Therefore, the vertical positions of the first airbag 40 and the second airbag 42 become stable. Therefore, in addition to the aforementioned advantage of the near-root portion 40A of the first airbag 40 and the near-root portion 42A of the second airbag 42 taking reaction forces F1, F2 from each other, the embodiment achieves a retention force of retaining ideal shapes of the first airbag 40 and the second airbag 42 after deployment. Consequently, the post-deployment shapes of the first airbag 40 and the second airbag 42 will be stable, and the capability of restraining the head of the occupant P can be enhanced.

Furthermore, since the support portion 72 is present extending downward from the distal end portion 40B of the first airbag 40 in the manner of a reed screen or the like, the head of an occupant P first contacts the support portion 72, and then enters a space between the first airbag 40 and the second airbag 42 while turning the support portion 72 toward the front side of the vehicle around the distal end portion 40B of the first airbag 40. Therefore, the thickness of the first airbag 40 is increased substantially by the thickness of the support portion 72 superposed thereon, and an advantage of correspondingly earlier exertion of a head restraining force is also achieved.

### Seventh Embodiment

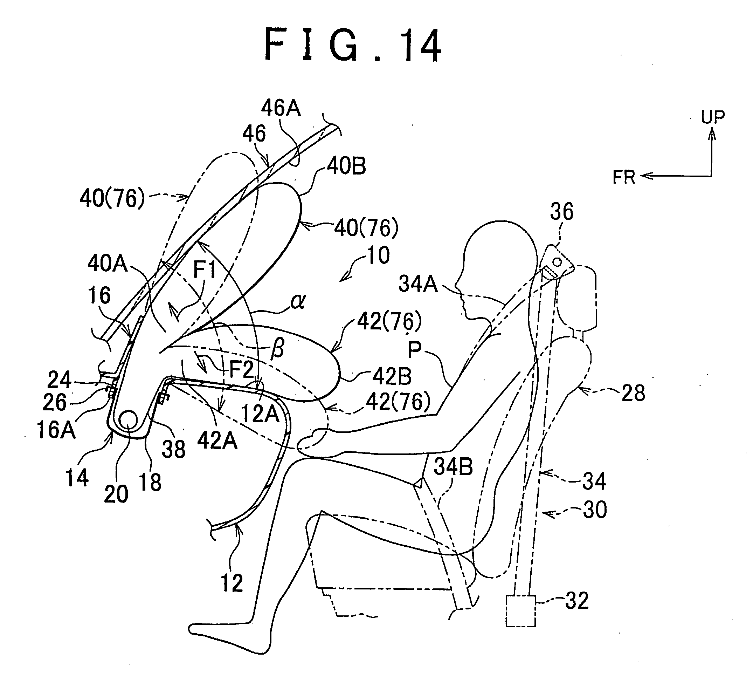

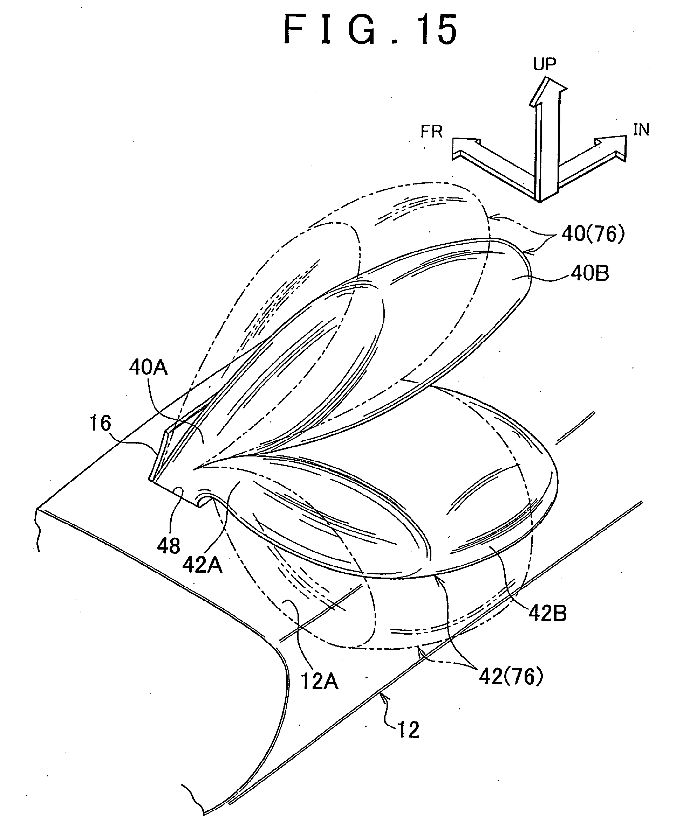

Next, a seventh embodiment of the airbag apparatus in accordance with the invention will be described with reference to FIGS. 14 and 15.

As shown in these drawings, in a passenger-seat side airbag apparatus 10 in accordance with the seventh embodiment, a setting is made such that a first airbag 40 and a second airbag 42 constituting a main body portion of a passenger-seat side airbag 76 assume a shape indicated by two-dot chain line in FIG. 14, in the design stage, that is, the angle β between the first and second airbags 40, 42 is larger than the angle α between the inside surface 46A of the windshield 46 and the upper surface 12A of the instrument panel 12, and the sewing process is accordingly performed.

According to the embodiment constructed as described above, at the time of inflation of the passenger-seat side airbag 76, the first airbag 40 and the second airbag 42 tend to inflate and deploy into the two-dot line-indicated shape shown in FIG. 14 due to the design setting; however, since the inside surface 46A of the windshield 46 and the upper surface 12A of the instrument panel 12 are present, the first and second airbags 40, 42 inflate and deploy into a shape indicated by a solid line in FIG. 14. Therefore, since the first airbag 40 and the second airbag 42 deploy into a state where the two airbags are elastically deformed in such directions that the angle therebetween reduces, the elastic restoration forces of returning the angle therebetween from α to β act. Hence, since the first airbag 40 and the second airbag 42 are pressed against the inside surface 46A of the windshield 46 and the upper surface 12A of the instrument panel 12, respectively, in directions away from each other, the vertical positions of the first airbag 40 and the second airbag 42 become stable. Therefore, in addition to the aforementioned advantage of the near-root portion 40A of the first airbag 40 and the near-root portion 42A of the second airbag 42 taking reaction forces F1, F2 from each other, the embodiment achieves a retention force of retaining ideal shapes of the first airbag 40 and the second airbag 42 after deployment. Consequently, the post-deployment shapes of the first airbag 40 and the second airbag 42 will be stable, and the capability of restraining the head of the occupant P can be enhanced.

Furthermore, since this embodiment eliminates the need for an extra airbag (third airbag) for retaining a shape, the embodiment achieves a similar shape retaining effect while having a simple structure, and requires a less capacity of the passenger-seat side airbag 76.

### Eighth Embodiment

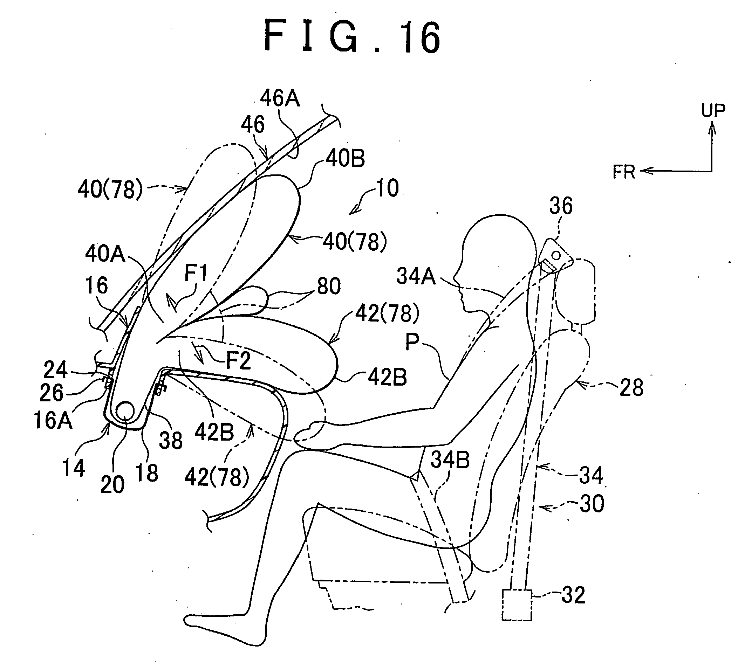

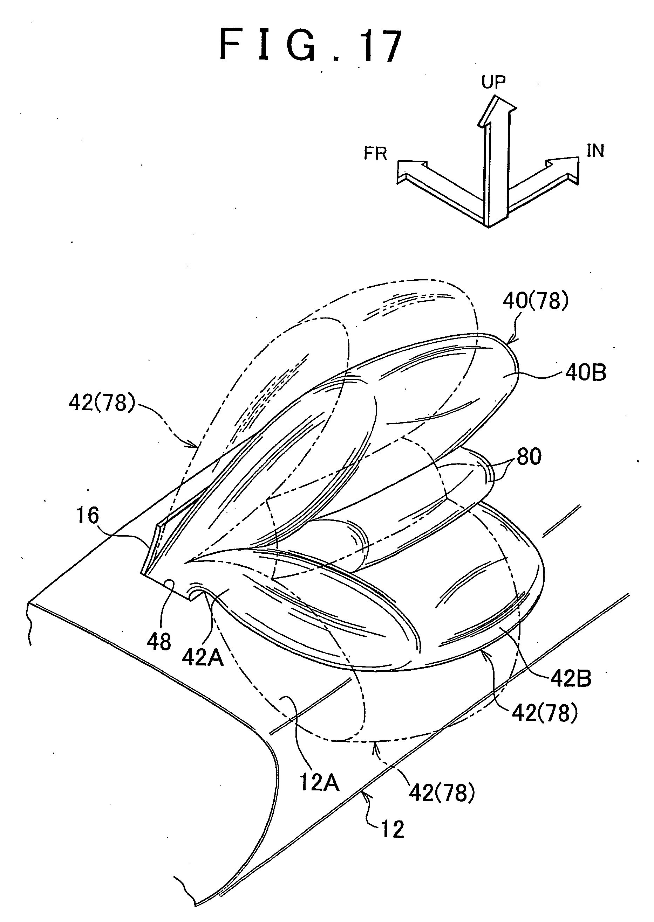

Next, an eighth embodiment of the airbag apparatus in accordance with the invention will be described with reference to FIGS. 16 and 17.

As shown in these drawings, a passenger-seat side airbag apparatus 10 in accordance with the eighth embodiment has a feature where the above-described construction of the seventh embodiment is adopted, and, in addition, a small-size airbag 80 is provided at a site where a first airbag 40 and a second airbag 42 constituting a main body portion of a passenger-seat side airbag 78 intersect. The small-size airbag 80 is connected in communication with the first airbag 40 and the second airbag 42. When the passenger-seat side airbag 78 is in a shape indicated by a two-dot chain line in FIG. 16, a surface of the small-size airbag 80 that faces an occupant P assumes an arc shape in section (i.e., is not compressed vertically). However, when the passenger-seat side airbag 78 is in a shape indicated by a solid line in FIG. 14, the small-size airbag 8 has a shape that is compressed between the first airbag 40 and the second airbag 42.

In this embodiment, since the construction of the seventh embodiment is adopted, substantially the same operation and effects as in the seventh embodiment are achieved.

Furthermore, in this embodiment, since the small-size airbag 80 is present in a compressed state between the first airbag 40 and the second airbag 42, the first airbag 40 and the second airbag 42 receive reaction forces due to elastic restoration forces at sites that are toward the occupant side from the near-root portions 40A, 42A, in addition to taking reaction forces F1, F2 at the near-root portions 40A, 42A. Thus, the force that causes the first airbag 40 to extend along the inside surface 46A of the windshield 46 and causes the second airbag 42 to extend along the upper surface 12A of the instrument panel 12 is increased. Therefore, the vertical positions of the first airbag 40 and the second airbag 42 become more stable. Consequently, the post-deployment shapes of the first airbag 40 and the second airbag 42 will be stable, and the capability of restraining the head of the occupant P can be enhanced.

Furthermore, when the small-size airbag 80 is compressed, the distal end portion thereof becomes closer to the occupant P, so that the initial restraint capability for the head of the occupant P improves. In that sense, the structure of this embodiment can be said to also achieve the operation and effects of the structure of the second embodiment in which the cloth 52 is connected between the distal ends of the first and second airbags.

### Supplemental Description of the Foregoing Embodiments

Supplemental description will be given regarding the foregoing embodiments.

(1) Although the foregoing embodiments are predicated on the application of the invention to the passenger-seat side airbag apparatus 10, this is not restrictive. For example, the invention can be applied as a driver's seat-purpose airbag apparatus in the case of lever-operated type vehicles in which the steering structure does not employ a conventional steering wheel, but is operated with a lever, and the like.

(2) Although the foregoing embodiments employ an ordinary-type occupant-restraining webbing 34 in the seat belt apparatus 30, this is not restrictive. For example, a so-called air belt type webbing that is inflated by gas from an inflator at the time of a collusion may also be adopted.

(3) In the invention, the "time of a frontal collision" includes cases where a frontal collision state of the own vehicle is detected by an airbag sensor, and also includes cases where it is predicted by a collision predicting sensor, such as a pre-crash sensor or the like, that the own vehicle will enter a frontal collision with another vehicle or the like.

(4) The distinction between the accordion folding and the roll folding will be described. In the cases where the 180-degree folding is performed only once, and the cases where a 180-degree fold is followed by a 180-degree fold made in the opposite direction, the folding is termed "accordion folding". In the cases where a 180-degree fold is followed by another 180-degree fold in the same direction, resulting in a 360-degree roll, the folding is termed "roll folding".

(5) Although in the foregoing embodiments, the first airbag 40 and the second airbag 42 are constructed as a single airbag whose base end portion 38 is shared by the two airbags, this is not restrictive. For example, the first airbag and the second airbag may be completely separate and independent of each other. In that case, it is permissible to adopt a construction in which two inflators are provided for supplying gas to the first airbag and the second airbag. It is also possible to employ only one inflator and divide the rectifying opening portion of the diffuser for the use for the first airbag and the use for the second airbag.

## Claims

1. An airbag apparatus comprising:
gas generation means (20) that activates to jet a gas at a time of a vehicle collision; and
an airbag (44; 50; 54; 60; 64; 70; 76; 78) that includes a thin type first airbag (40) that is deployed along an inside surface (46A) of a windshield (46) by receiving a supply of the gas generated by the gas generation means (20), and a thin type second airbag (42) that is deployed along an upper surface (12A) of an instrument panel (12) by receiving a supply of the gas generated by the gas generation means (20), the first airbag (40) and the second airbag (42) being housed in a folded state in the instrument panel (12), **characterized in that**
the airbag (44; 50; 54; 60; 64; 70; 76; 78) restrains a head of an occupant (P) in a webbing fastened state of a seat belt apparatus (30) by receiving the head between the first airbag (40) and the second airbag (42).

2. The airbag apparatus according to claim 1, wherein the first airbag (40) is deployed to a side of the windshield (46) and the second airbag (42) is deployed to a side of the upper surface (12A) of the instrument panel (12) as a near-root portion (40A) of the first airbag (40) and a near-root portion (42A) of the second airbag (42) receive reaction forces from each other.

3. The airbag apparatus according to claim 1, wherein a distal end portion (40B) of the first airbag (40) and a distal end portion (42B) of the second airbag (42) are interconnected substantially in an up-down direction of the vehicle by a soft non-expansible material (52).

4. The airbag apparatus according to claim 3, wherein the non-expansible material (52) is formed by a cloth material.

5. The airbag apparatus according to claim 1, wherein shape retention means (56;62; 66; 72, 74) for retaining a shape of the first airbag (40) and a shape of the second airbag (42) is provided between the first airbag (40) and the second airbag (42).

6. The airbag apparatus according to claim 1, wherein the airbag (76; 78) has been sewed so that an angle formed by the first airbag (40) and the second airbag (42) is larger than an angle formed by the inside surface (46A) of the windshield (46) and the upper surface (12A) of the instrument panel (12).

7. The airbag apparatus according to claim 1, wherein:
the first airbag (40) and the second airbag (42) are separately and independently folded both in a roll folding, or both in an accordion folding, or one in the roll folding and the other in the accordion folding, or at least one in a combination of the roll folding and the accordion folding; and
the first airbag (40) and the second airbag (42) are folded so as to unfold in directions away from each other.

8. The airbag apparatus according to claim 5, wherein the shape retention means is formed by a pair of left and right side wall portions (56) that interconnect opposite side portions of the first airbag (40) and the second airbag (42).

9. The airbag apparatus according to claim 5, wherein the shape retention means is formed by a pair of left and right columns (62) that interconnect the distal end portions (40B, 42B) of the first airbag (40) and the second airbag (42) in a vertical direction relative to a vehicle in which the airbag apparatus is provided.

10. The airbag apparatus according to claim 5, wherein the shape retention means is formed by a support portion (66) that has a transversely extending cylindrical shape and interconnects the first airbag (40) and the second airbag (42) at a site adjacent to the near-root portion (40A) of the first airbag (40) and a site adjacent to the near-root portion (42A) of the second airbag (42) in a vertical direction relative to the vehicle in which the airbag apparatus is provided.

11. The airbag apparatus according to claim 10, wherein the support portion (66) has a hollow shape and is connected in communication with both the first airbag (40) and the second airbag (42).

12. The airbag apparatus according to claim 10, wherein a wedge-shape gap space (68) is formed between the support portion (66) and a site where the first airbag (40) and the second airbag (42) intersect.

13. The airbag apparatus according to claim 5, wherein the shape retention means is formed by a support portion (72) which is bent and extends downward from a distal end portion (40B) of a first airbag (40).

14. The airbag apparatus according to claim 13, wherein:
the support portion (72) is formed in a triangular shape that tapers downward in a side view; and
a distal end portion (72A) of the support portion (72) contacts the second airbag (42).

15. The airbag apparatus according to claim 13, wherein an elongated strap (74) interconnects a forward surface of a distal end portion (72A) of the support portion (72) and a site adjacent to the site where the first airbag (40) and the second airbag (42) intersect.

16. The airbag apparatus according to claim 5, wherein the shape retention means is formed by a small-size airbag (80) that is provided at a site where the first airbag (40) and a second airbag (42) intersect, wherein the small-size airbag (80) is connected in communication with both the first airbag (40) and the second airbag (42).

17. The airbag apparatus according to claim 1, wherein the airbag (44; 50; 54; 60; 64; 70; 76; 78) has a generally L-shape when the airbag (44; 50; 54; 60; 64; 70; 76; 78) is deployed.

18. The airbag apparatus according to claim 1, wherein the airbag (44; 50; 54; 60; 64; 70; 76; 78) is deployed in an area where the airbag (44; 50; 54; 60; 64; 70; 76; 78) restrains only the head of the occupant (P).

## Patentansprüche

1. Airbagvorrichtung, welche aufweist:
eine Gaserzeugungseinrichtung (20), welche sich in Betrieb setzt, um ein Gas zum Zeitpunkt einer Fahrzeugkollision auszustoßen; und
einen Airbag (44; 50; 54; 60; 64; 70; 76; 78), welcher einen dünnartigen ersten Airbag (40), welcher sich entlang einer Innenoberfläche (46A) einer Windschutzscheibe (46) durch Erhalt einer Zufuhr des durch die Gaserzeugungseinrichtung (20) erzeugten Gases entfaltet, und einen dünnartigen zweiten Airbag (42) enthält, welcher sich entlang einer oberen Oberfläche (12A) eines Armaturenbretts (12) durch Erhalt einer Zufuhr des durch die Gaserzeugungseinrichtung (20) erzeugten Gases entfaltet, wobei der erste Airbag (40) und der zweite Airbag (42) in einem gefalteten Zustand in dem Armaturenbrett (12) untergebracht sind, **dadurch gekennzeichnet, dass**
der Airbag (44; 50; 54; 60; 64; 70; 76; 78) einen Kopf eines Insassen (P) im angegurteten Zustand einer Sicherheitsgurtvorrichtung (30) zurückhält, indem der Kopf zwischen dem ersten Airbag (40) und dem zweiten Airbag (42) aufgenommen wird.

2. Airbagvorrichtung gemäß Anspruch 1, wobei der erste Airbag (40) zur Seite der Windschutzscheibe (46) entfaltet wird und der zweite Airbag (42) zur Seite der oberen Oberfläche (12A) des Armaturenbretts (12) entfaltet wird, wenn ein wurzelnaher Abschnitt (40A) des ersten Airbags (40) und ein wurzelnaher Abschnitt (42A) des zweiten Airbags (42) voneinander Gegenkräfte erhalten.

3. Airbagvorrichtung gemäß Anspruch 1, wobei ein distaler Endabschnitt (40B) des ersten Airbags (40) und ein distaler Endabschnitt (42B) des zweiten Airbags (42) in einer im Wesentlichen vertikalen Richtung des Fahrzeugs durch ein weiches, nicht dehnbares Material (52) miteinander verbunden sind.

4. Airbagvorrichtung gemäß Anspruch 3, wobei das nicht dehnbare Material (52) durch ein Gewebematerial gebildet wird.

5. Airbagvorrichtung gemäß Anspruch 1, wobei zwischen dem ersten Airbag (40) und dem zweiten Airbag (42) eine Formbeibehaltungseinrichtung (56; 62; 66; 72, 74) zur Beibehaltung einer Form des ersten Airbags (40) und einer Form des zweiten Airbags (42) vorgesehen ist.

6. Airbagvorrichtung gemäß Anspruch 1, wobei der Airbag (76; 78) so genäht worden ist, dass ein durch den ersten Airbag (40) und den zweiten Airbag (42) gebildeter Winkel größer ist als ein durch die Innenoberfläche (46A) der Windschutzscheibe (46) und die obere Oberfläche (12A) des Armaturenbretts (12) gebildeter Winkel ist.

7. Airbagvorrichtung gemäß Anspruch 1, wobei der erste Airbag (40) und der zweite Airbag (42) beide getrennt und unabhängig aufgerollt sind oder beide ziehharmonikaartig gefaltet sind oder einer aufgerollt und der andere ziehharmonikaartig gefaltet ist oder wenigstens einer kombiniert aufgerollt und ziehharmonikaartig gefaltet ist; und
der erste Airbag (40) und der zweite Airbag (42) so gefaltet sind, dass sie sich in entgegengesetzte Richtungen entfalten.

8. Airbagvorrichtung gemäß Anspruch 5, wobei die Formbeibehaltungseinrichtung durch ein Paar von linken und rechten Seitenwandabschnitten (56) gebildet wird, welche gegenüberliegende Seitenabschnitte des ersten Airbags (40) und des zweiten Airbags (42) miteinander verbinden.

9. Airbagvorrichtung gemäß Anspruch 5, wobei die Formbeibehaltungseinrichtung durch ein Paar von linken und rechten Säulen (62) gebildet wird, welche die distalen Endabschnitte (40B, 42B) des ersten Airbags (40) und des zweiten Airbags (42) in einer vertikalen Richtung des Fahrzeugs, in welchem die Airbagvorrichtung vorgesehen ist, miteinander verbinden.

10. Airbagvorrichtung gemäß Anspruch 5, wobei die Formbeibehaltungseinrichtung durch einen Stützabschnitt (66) gebildet wird, welcher eine sich quer erstreckende zylindrische Form hat und den ersten Airbag (40) und den zweiten Airbag (42) an einer dem wurzelnahen Abschnitt (40A) des ersten Airbags (40) benachbarten Stelle und einer dem wurzelnahen Abschnitt (42A) des zweiten Airbags (42) benachbarten Stelle in vertikaler Richtung des Fahrzeugs, in welchem die Airbagvorrichtung vorgesehen ist, miteinander verbindet.

11. Airbagvorrichtung gemäß Anspruch 10, wobei der Stützabschnitt (66) hohlförmig ist und mit sowohl dem ersten Airbag (40) als auch dem zweiten Airbag (42) in Verbindung steht.

12. Airbagvorrichtung gemäß Anspruch 10, wobei ein keilförmiger Spaltraum (68) zwischen dem Stützabschnitt (66) und einer Stelle ausgebildet ist, an welcher sich der erste Airbag (40) und der zweite Airbag (42) sich schneiden.

13. Airbagvorrichtung gemäß Anspruch 5, wobei die Formbeibehaltungseinrichtung durch einen Stützabschnitt (72) gebildet wird, welcher gebogen ist und sich von einem distalen Endabschnitt (40B) des ersten Airbags (40) nach unten erstreckt.

14. Airbagvorrichtung gemäß Anspruch 13, wobei
der Stützabschnitt (72) in einer Dreiecksform ausgebildet ist, welche sich in einer Seitenansicht nach unten verjüngt; und
ein distaler Endabschnitt (72A) des Stützabschnitts (72) den zweiten Airbag (42) berührt.

15. Airbagvorrichtung gemäß Anspruch 13, wobei ein gestrecktes Band (74) eine Vorderoberfläche eines distalen Endabschnitts (72A) des Stützabschnitts (72) und eine Stelle miteinander verbindet, welche einer Stelle benachbart ist, an welcher sich der erste Airbag (40) und der zweite Airbag (42) teilen.

16. Airbagvorrichtung gemäß Anspruch 5, wobei die Formbeibehaltungseinrichtung durch einen kleinen Airbag (80) gebildet wird, welcher an einer Stelle vorgesehen ist, an welcher sich der erste Airbag (40) und der zweite Airbag (42) teilen, wobei der kleine Airbag (80) mit sowohl dem ersten Airbag (40) als auch dem zweiten Airbag (42) in Verbindung steht.

17. Airbagvorrichtung gemäß Anspruch 1, wobei der Airbag (44; 50; 54; 60; 64; 70; 76; 78) im Allgemeinen L-förmig ist, wenn der Airbag (44; 50; 54; 60; 64; 70; 76; 78) entfaltet ist.

18. Airbagvorrichtung gemäß Anspruch 1, wobei der Airbag (44; 50; 54; 60; 64; 70; 76; 78) in einem Bereich entfaltet wird, in welchem der Airbag (44; 50; 54; 60; 64; 70; 76; 78) nur den Kopf des Insassen (P) zurückhält.

## Revendications

1. Dispositif de coussin de sécurité gonflable comprenant:
un moyen de génération de gaz (20) qui s'active pour gicler un gaz au moment d'une collision du véhicule; et un coussin de sécurité gonflable (44; 50; 54; 60; 64; 70; 76; 78) qui comporte un premier coussin de sécurité gonflable (40) de type fin qui est déployé le long d'une surface interne (64A) d'un pare-brise (46) en recevant une alimentation en gaz généré par le moyen de génération de gaz (20), et un deuxième coussin de sécurité gonflable (42) de type fin qui est déployé le long d'une surface supérieure (12A) d'un tableau de bord (12) en recevant une alimentation en gaz généré par le moyen de génération de gaz (20), le premier coussin de sécurité gonflable (40) et le deuxième coussin de sécurité gonflable (42) étant logés dans un état plié dans le tableau de bord (12), **caractérisé en ce que**
le coussin de sécurité gonflable (44; 50; 54; 60; 64; 70; 76; 78) retient la tête d'un passager (P) dans un état fixé par la sangle d'un dispositif de ceinture de sécurité (30) en recevant la tête entre le premier coussin de sécurité gonflable (40) et le deuxième coussin de sécurité gonflable (42).

2. Dispositif de coussin de sécurité gonflable selon la revendication 1, dans lequel le premier coussin de sécurité gonflable (40) est déployé vers un côté du pare-brise (46) et le deuxième coussin de sécurité gonflable (42) est déployé vers un côté de la surface supérieure (12A) du tableau de bord (12) quand une partie proche de la base (40A) du premier coussin de sécurité gonflable (40) et une partie proche de la base (42A) du deuxième coussin de sécurité gonflable (42) reçoivent, l'une de l'autre, des forces de réaction.

3. Dispositif de coussin de sécurité gonflable selon la revendication 1, dans lequel une partie extrême distale (40B) du premier coussin de sécurité gonflable (40) et une partie extrême distale (42B) du deuxième coussin de sécurité gonflable (42) sont essentiellement interconnectés dans une direction vers le haut et vers le bas du véhicule par un matériau non extensible doux (52).

4. Dispositif de coussin de sécurité gonflable selon la revendication 3, dans lequel le matériau non extensible (52) est formé par un matériau en tissu.

5. Dispositif de coussin de sécurité gonflable selon la revendication 1, dans lequel un moyen de maintien de forme (56; 62; 66; 72, 74) pour garder la forme du premier coussin de sécurité gonflable (40) et la forme du deuxième coussin de sécurité gonflable (42) est pourvu entre le premier coussin de sécurité gonflable (40) et le deuxième coussin de sécurité gonflable (42).

6. Dispositif de coussin de sécurité gonflable selon la revendication 1, dans lequel le coussin de sécurité gonflable (76; 78) a été cousu de telle sorte qu'un angle formé par le premier coussin de sécurité gonflable (40) et le deuxième coussin de sécurité gonflable (42) soit plus grand qu'un angle formé par la surface interne (46A) du pare-brise (46) et la surface supérieure (12A) du tableau de bord (12).

7. Dispositif de coussin de sécurité gonflable selon la revendication 1, dans lequel:
le premier coussin de sécurité gonflable (40) et le deuxième coussin de sécurité gonflable (42) sont tous deux pliés séparément et indépendamment en un pliage en rouleau, ou les deux en un pliage en accordéon, ou l'un en un pliage en rouleau et l'autre en un pliage en accordéon, ou au moins dans une combinaison du pliage en rouleau et du pliage en accordéon; et
le premier coussin de sécurité gonflable (40) et le deuxième coussin de sécurité gonflable (42) sont pliés de sorte à se déplier dans des directions différentes.

8. Dispositif de coussin de sécurité gonflable selon la revendication 5, dans lequel le moyen de maintien de forme est formé par une paire de parties de paroi des côtés droit et gauche (56) qui interconnectent les parties des côtés opposés du premier coussin de sécurité gonflable (40) et du deuxième coussin de sécurité gonflable (42).

9. Dispositif de coussin de sécurité gonflable selon la revendication 5, dans lequel le moyen de maintien de forme est formé par une paire de colonnes droite et gauche (62) qui interconnectent les parties d'extrémités distales (40B, 42B) du premier coussin de sécurité gonflable (40) et du deuxième coussin de sécurité gonflable (42) dans une direction verticale par rapport à un véhicule dans lequel le dispositif de coussin de sécurité gonflable (40) est prévu.

10. Dispositif de coussin de sécurité gonflable selon la revendication 5, dans lequel le moyen de maintien de forme est formé par une partie support (66) qui a une forme cylindrique s'étendant de manière transversale et interconnecte le premier coussin de sécurité gonflable (40) et le deuxième coussin de sécurité gonflable (42) à un emplacement adjacent à la partie proche de la base (40A) du premier coussin de sécurité gonflable (40) et à un emplacement adjacent à la partie proche de la base (42A) du deuxième coussin de sécurité gonflable (42) dans une direction verticale par rapport au véhicule dans lequel le dispositif de coussin de sécurité gonflable (40) est prévu.

11. Dispositif de coussin de sécurité gonflable selon la revendication 10, dans lequel la partie support (66) possède une forme creuse et se met en communication avec le premier coussin de sécurité gonflable (40) et le deuxième coussin de sécurité gonflable (42).

12. Dispositif de coussin de sécurité gonflable selon la revendication 10, dans lequel un espace de dégagement en forme de coin (68) est formé entre la partie support (66) et un emplacement où le premier coussin de sécurité gonflable (40) et le deuxième coussin de sécurité gonflable (42) se croisent.

13. Dispositif de coussin de sécurité gonflable selon la revendication 5, dans lequel le moyen de maintien de forme est formé par une partie support (72) qui est pliée et qui s'étend vers le bas depuis une partie extrême distale (40B) d'un premier coussin de sécurité gonflable (40).

14. Dispositif de coussin de sécurité gonflable selon la revendication 13, dans lequel:
la partie support (72) est en forme de triangle qui s'effile vers le bas en vue latérale; et
une partie extrême distale (72A) de la partie support (72) contacte le deuxième coussin de sécurité gonflable (42).

15. Dispositif de coussin de sécurité gonflable selon la revendication 13, dans lequel une bandee allongée (74) interconnecte une surface avant d'une partie extrême distale (72A) de la partie support (72) et un emplacement adjacent à l'emplacement où le premier coussin de sécurité gonflable (40) et le deuxième coussin de sécurité gonflable (42) se croisent.

16. Dispositif de coussin de sécurité gonflable selon la revendication 5, dans lequel le moyen de maintien de forme est formé par un coussin de sécurité gonflable de petite taille (80) qui est pourvu à un emplacement où le premier coussin de sécurité gonflable (40) et le deuxième coussin de sécurité gonflable (42) se croisent, où le coussin de sécurité gonflable de petite taille (80) est en communication avec le premier coussin de sécurité gonflable (40) et le deuxième coussin de sécurité gonflable (42).

17. Dispositif de coussin de sécurité gonflable selon la revendication 1, dans lequel le coussin de sécurité gonflable (44; 50; 54; 60; 64; 70; 76; 78) a globalement la forme d'un L lorsque le coussin de sécurité gonflable (44; 50; 54; 60; 64; 70; 76; 78) est déployé.

18. Dispositif de coussin de sécurité gonflable selon la revendication 1, dans lequel le coussin de sécurité gonflable (44; 50; 54; 60; 64; 70; 76; 78) est déployé dans une zone où le coussin de sécurité gonflable (44; 50; 54; 60; 64; 70; 76; 78) retient uniquement la tête du passager (P).
